# EUROPÄISCHE PATENTANMELDUNG

(11) **EP 3 104 240 A1**
(43) Veröffentlichungstag der Anmeldung: **14.12.2016**
(21) Anmeldenummer: 15171714.7
(22) Anmeldetag: 11.06.2015
(51) Int. Cl.: G05B 19/418, G05B 23/02

(54) **EINRICHTUNG UND VERFAHREN ZUR OPTIMIERUNG EINES ARBEITSPUNKTES FÜR DEN BETRIEB EINER ANLAGE**

(71) Anmelder: Siemens Aktiengesellschaft, 80333 München (DE)
(72) Erfinder: Pfeiffer, Bernd-Markus, 76744 Wörth (DE); Rebling, Mathias, 90475 Nürnberg (DE)

(57) **Zusammenfassung**

Die Erfindung betrifft eine Einrichtung (2) und ein Verfahren zur Optimierung eines Arbeitspunktes für den Betrieb einer automatisierten prozesstechnischen Anlage (1). Zur Bestimmung des Arbeitspunktes werden historische Prozessdaten ausgewertet, welche in Form von zeitlichen Datenfolgen, die bei einem Betrieb der Anlage erfasst wurden, in einem Datenspeicher (6) abgespeichert sind. Für verschiedene Arbeitspunkte, die vorzugsweise jeweils einen stationären Zustand des Anlagenbetriebs entsprechen, wird jeweils eine Maßzahl für die Güte des Betriebs der Anlage bestimmt. Der Arbeitspunkt aus der Vergangenheit mit der besten Güte kann vorteilhaft für den zukünftigen Betrieb der Anlage verwendet werden oder für eine sich anschließende weitere Optimierung genutzt werden.

## Beschreibung

Die Erfindung betrifft eine Einrichtung und ein Verfahren zur Optimierung eines Arbeitspunktes für den Betrieb einer automatisierten prozesstechnischen Anlage, wobei ein Arbeitspunkt mit der besten Güte entsprechend einem Gütekriterium bestimmt und angezeigt wird.

Eine Optimierung des Arbeitspunktes für den Betrieb automatisierter prozesstechnischer Anlagen erfolgt häufig unter wirtschaftlichen Gesichtspunkten. Ziele können dabei sein, den Energie- und/oder den Rohstoffverbrauch zu senken, den Durchsatz und/oder die Ausbeute zu erhöhen. Durch die Optimierung des Arbeitspunktes kann somit das Potential der vorhandenen Anlage im Sinne einer Produktivitätssteigerung besser genutzt werden. Die Optimierung kann eine komplette Produktionsanlage, eine Teilanlage oder lediglich ein Produktionsgerät betreffen. Im Folgenden wird dafür einheitlich der Begriff Anlage verwendet. In jeder Anlage steht eine gewisse Zahl von Freiheitsgraden im Hinblick auf die Wahl des Arbeitspunktes für den Betrieb der Anlage zur Verfügung. Diese werden durch sogenannte Entscheidungsvariablen repräsentiert, typischerweise Sollwerte von Reglern, die in einem begrenzten Bereich verstellt werden können. Die Verstellbereiche sind beispielsweise begrenzt durch Sicherheitsvorschriften, durch Leistungsdaten der Anlagenkomponenten und/oder durch Anforderungen an die Produktqualität, welche als Nebenbedingungen für die Optimierung erscheinen. Die Zielfunktion der Optimierung, häufig als Gütekriterium bezeichnet, kann je nach Anwendung sehr individuell definiert werden. Häufige Zielfunktionen sind die Maximierung des wirtschaftlichen Ertrags des Anlagenbetriebs pro Zeiteinheit, die Minimierung des spezifischen Energieverbrauchs bezogen auf die Produktmenge und/oder die Minimierung der Belastung einer Anlagenkomponente, deren Verschleiß mit hohen Kosten verbunden ist. In diese Zielfunktionen können neben Entscheidungsvariablen auch weitere messbare Prozessvariablen sowie externe Parameter, z. B. Preise für Rohstoffe, Energie und Produkt, eingehen. Das Ergebnis der Optimierung ist ein Vorschlag für eine Kombination von Werten der Entscheidungsvariablen, die zum einen im Sinne der Nebenbedingungen zulässig ist und zum anderen im Hinblick auf das Gütekriterium den maximalen Erfolg verspricht und somit einen optimierten Arbeitspunkt für den Betrieb der Anlage darstellt.

Eine betriebswirtschaftliche Arbeitspunktoptimierung ist beispielsweise bereits aus der Applikationsbeschreibung "SIMATIC PCS 7 - MPC für Wirbelschichttrockner" V1.0, Beitrags-ID:61926069, Siemens AG 2012, bekannt. Dabei wird als Gütekriterium eine Zielfunktion definiert, die linear von Stellund/oder Regelgrößen eines modellbasierten Prädiktivreglers (MPC) abhängt. Wegen der linearen Abhängigkeit des Gütekriteriums von den Entscheidungsvariablen kann durch den MPC-Baustein eine sogenannte LP-Optimierung (Lineare Programmierung) anhand aktueller Werte der Prozessvariablen vorgenommen werden.

Aus der US 7,701,353 B1 ist ein Verfahren zur Optimierung eines Arbeitspunktes bekannt, welches als sequentielle empirische Optimierung bezeichnet werden kann. Ausgehend von einem aktuellen Arbeitspunkt wird die Abhängigkeit eines Gütekriteriums von Entscheidungsvariablen durch kleine Testschritte erlernt. Diese Kenntnis wird anschließend dazu genutzt, weitere Schritte zur Änderung der Entscheidungsvariablen vorzuschlagen, welche eine anhand des Gütekriteriums berechnete Güte sukzessive verbessern. Nachteilig bei dem bekannten Verfahren ist, dass beim Start der Optimierung von einem quasi zufälligen aktuellen Arbeitspunkt ausgegangen werden muss und man sich schrittweise vorantastet, bis eine zielführende Optimierungsrichtung gefunden wird. Es kann also erforderlich sein, dass die Anlage zunächst über einen vergleichsweise langen Zeitraum in recht unwirtschaftlicher Weise betrieben werden muss, bevor das Optimierungsverfahren zu einem wirtschaftlichen Betrieb führt.

Der Erfindung liegt die Aufgabe zugrunde, eine Einrichtung und ein Verfahren zur Optimierung eines Arbeitspunktes für den Betrieb einer automatisierten prozesstechnischen Anlage zu schaffen, welche ein schnelleres Auffinden eines geeigneten Arbeitspunktes ermöglichen, wenn die Optimierung erst zu einem Zeitpunkt durchgeführt oder begonnen wird, vor welchem die Anlage bereits einen gewissen Zeitraum in Betrieb war.

Zur Lösung dieser Aufgabe weist die neue Optimierungseinrichtung der eingangs genannten Art die in Anspruch 1 angegebenen Merkmale auf. In den abhängigen Ansprüchen sind Weiterbildungen der Erfindung, in Anspruch 6 ein Optimierungsverfahren, in Anspruch 7 ein Computerprogramm zur Durchführung des Optimierungsverfahrens und in Anspruch 8 ein entsprechendes Computerprogrammprodukt beschrieben.

Zur Optimierung des Arbeitspunktes wird also "historischer" Datenbestand, der beim früheren Betrieb der Anlage erfasst und abgespeichert wurde, ausgewertet um herauszufinden, welcher der anhand der abgespeicherten Daten bestimmten Arbeitspunkte, die bei einem früheren Betrieb der Anlage erfasst wurden, im Lichte des definierten Gütekriteriums der beste ist. Dieser als Ergebnis der Optimierung erhaltene beste Arbeitspunkt kann für den weiteren Betrieb der Anlage verwendet werden oder er kann als Startpunkt für eine sich anschließende weitere Optimierung dienen. Gemäß einer weiteren Alternative kann der gefundene beste Arbeitspunkt beispielsweise bei einer sich anschließenden weiteren Optimierung zur Festlegung der Laufrichtung für eine schrittweise Optimierung vom aktuellen Arbeitspunkt in Richtung zum anhand des historischen Datenbestands bestimmten besten Arbeitspunkt verwendet werden. Der in gespeicherten Prozessdaten liegende Erfahrungsschatz wird somit in vorteilhafter Weise nun für die Optimierung des zukünftigen stationären Arbeitspunktes genutzt. Dadurch kann auf eine sequentielle empirische Optimierung, die bisher wegen der typischerweise zwischen 5 und 50 erforderlichen Iterationsschritte mit jeweils Einschwingvorgängen auf einen neuen stationären Zustand entsprechend viel Zeit benötigte, entweder ganz verzichtet werden, wenn der gefundene beste Arbeitspunkt als zukünftiger verwendet wird, oder die Zahl der Iterationsschritte kann signifikant verkürzt werden, wenn der beste Arbeitspunkt als neuer Startpunkt oder zur Definition der Laufrichtung für beispielsweise eine anschließende sequentielle Optimierung genutzt wird.

In einer besonders vorteilhaften Weiterbildung der Erfindung wird die Suche nach dem besten Arbeitspunkt anhand des historischen Datenbestands in Form von abgespeicherten zeitlichen Datenfolgen für die verschiedenen Prozessvariablen auf Arbeitspunkte beschränkt, welche stationären Zuständen des Anlagenbetriebs entsprechen. Dadurch wird eine für die Optimierung besonders gute Korrelation von Entscheidungsvariablen und Gütekriterium erreicht. In vorteilhafter Weise wird dadurch die Berücksichtigung von Arbeitspunkten vermieden, die den stationären Übergangsvorgängen entsprechen und beispielsweise bei Lastwechseln oder Sollwertsprüngen auftreten können. Bei derartigen Übergangsvorgängen können nämlich temporär Kombinationen von Werten der Prozessvariablen auftreten, die stationär nicht möglich sind und keinen reproduzierbaren Zusammenhang zum Gütekriterium haben.

Eine Mittelung der Werte der Prozessvariablen innerhalb der jeweiligen Zeitfenster mit näherungsweise stationärem Betrieb hat den Vorteil, dass der Einfluss von Messrauschen und von zufälligen Störungen reduziert wird. Dadurch kann die Zuverlässigkeit des Optimierungsergebnisses weiter verbessert werden.

Weiterhin können alle stationären Zustände, in denen irgendwelche Nebenbedingungen des Optimierungsproblems verletzt werden, z. B. Grenzwerte für die Produktqualität, in vorteilhafter Weise von der Bestimmung des besten Arbeitspunkts anhand historischer Prozessdaten ausgeschlossen werden. Es werden somit nur Arbeitspunkte ausgewählt, bei denen beispielsweise die Sicherheit der Anlage und die Produktqualität gewährleistet sind.

Vorteilhaft können bei dem Verfahren zudem messbare Störgrößen berücksichtigt werden. Als Störgrößen können beispielsweise Eingangsvariablen eines Prozesses angesehen werden, welche einen signifikanten Einfluss auf den Anlagenbetrieb haben, aber nicht aktiv beeinflusst werden können. Diese Störgrößen stehen somit nicht als Entscheidungsvariablen zur Verfügung. Typische Beispiele dafür sind die Außentemperatur bei Anlagen, die im Freien stehen, oder die Rohstoffqualität, falls diese messbar und signifikant schwankend ist. Wertebereiche derartiger Störgrößen können in Cluster eingeteilt werden. Die stationären Zuständen entsprechenden Arbeitspunkte werden gemäß den zeitgleich erfassten Störgrößen den jeweiligen Clustern zugeordnet. Die Suche nach dem besten Arbeitspunkt aus einer Vielzahl historischer Arbeitspunkte findet dann jeweils innerhalb eines Clusters statt. Der gefundene beste Arbeitspunkt ist dann nur für zukünftige Betriebszustände relevant, in denen sich die messbare Störgröße im Bereich desselben Clusters befindet. Für Betriebszustände, die verschiedenen Clustern angehören, kann es somit verschiedene beste Arbeitspunkte geben, z. B. einen optimalen Arbeitspunkt für Sommerbetrieb und einen optimalen Arbeitspunkt für Winterbetrieb.

In besonders vorteilhafter Weise kann die neue Einrichtung zur Optimierung des Arbeitspunktes für den Betrieb einer automatisierten prozesstechnischen Anlage in einer Software-Umgebung zur Cloud-basierten Anlagenüberwachung implementiert werden. Eine derartige Software-Umgebung stellt beispielsweise der datenbasierte Remote Service "Control Performance Analytics" der Siemens AG dar. Daten aus Kundenanlagen werden mithilfe von Software-Agenten gesammelt, aggregiert und an ein Siemens Service Operation Center geschickt, in welchem sie auf einem Remote-Service-Rechner abgespeichert werden. Dort werden die mithilfe von verschiedenen "Data Analytics" Software-Applikationen halbautomatisch ausgewertet. Bei Bedarf können für den Remote Service besonders geschulte Experten auf dieser Datenbasis hocheffizient arbeiten. Die Ergebnisse der Datenanalyse und der Optimierung des Arbeitspunktes können auf einem Monitor des Remote-Service-Rechners angezeigt und/oder auf einem Sharepoint bereitgestellt werden, sodass sie vom Endkunden, d. h. dem Bediener der automatisierten prozesstechnischen Anlage, z. B. in einem Browser betrachtet werden können.

Das Verfahren zur Optimierung eines Arbeitspunktes wird somit bevorzugt in Software oder in einer Kombination Soft-/Hardware implementiert, sodass die Erfindung auch ein Computerprogramm mit durch einen Computer ausführbaren Programmcodeanweisungen zur Implementierung des Optimierungsverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann beispielsweise in einem Speicher eines Leitsystems einer automatisierten prozesstechnischen Anlage vorgehalten oder in diesen geladen werden, sodass beim Betrieb der Anlage das Optimierungsverfahren automatisch durchgeführt wird, oder das Computerprogramm kann bei einer Cloud-basierten Arbeitspunktoptimierung in einem Speicher eines Remote-Service-Rechners vorgehalten oder in diesen ladbar sein. Zudem kann das Computerprogramm auch in einem mit dem Leitsystem und dem Remote-Service-Rechner verbundenen Rechner vorgehalten sein, der über Netzwerke mit beiden anderen Systemen kommuniziert.

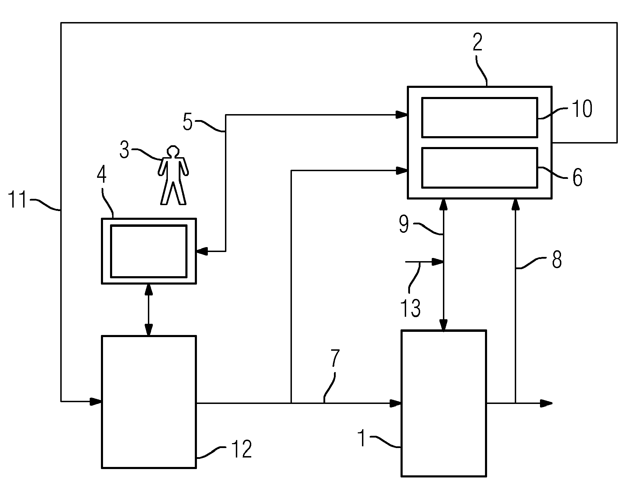

Anhand der Zeichnung, in der ein Ausführungsbeispiel der Erfindung dargestellt ist, werden im Folgenden die Erfindung sowie Ausgestaltungen und Vorteile näher erläutert.

Zur Verdeutlichung der Erfindung zeigt die einzige Figur ein Blockschaltbild mit einer automatisierten prozesstechnischen Anlage 1, deren optimaler Arbeitspunkt anhand historischer Prozessdaten mittels einer Einrichtung 2 gefunden wird. In dem gezeigten Ausführungsbeispiel handelt es sich bei der Anlage 1 um einen einstufigen Wirbelschichttrockner für HDPE (High Density Polyethylen)-Pulver, wie er aus der eingangs genannten Applikationsbeschreibung bereits bekannt ist. Bezüglich einer detaillierten Darstellung des Trockners wird daher auf die genannte Applikationsbeschreibung verwiesen. In der Anlage 1 wird dem Trockner über eine Zellenradschleuse ein Edukt, ein Feuchtgut mit einem gewissen Wassergehalt, von oben zugeführt. Dabei wird der Massenstrom des Edukts mittels eines Reglers per Eingriff auf die Drehzahl der Zellenradschleuse geregelt. Frischluft wird mit einem Kompressor angesaugt und in einem Wärmetauscher mit Heizdampf erhitzt. Der Massenstrom der Heißluft wird mittels eines weiteren Reglers per Eingriff auf die Drehzahl des Kompressors geregelt. Die Temperatur der Heißluft wird in einer Kaskadenregelung mit einem äußeren Regler über einen Folgeregler per Eingriff auf ein Ventil in einer Dampfleitung des Heizdampfes geregelt. Das mittels des Trockners erhaltene getrocknete Produkt wird unten abgezogen, wobei die Feuchtigkeit und die Temperatur des Produkts gemessen werden.

Als Gütekriterium wird ein wirtschaftlicher Ertrag J des Betriebs der Anlage 1 durch einen Bediener 3 an einer Bedieneinheit 4 durch Eingabe vorgegeben und mittels einer Signalverbindung 5 an die Einrichtung 2 übergeben und dort abgespeichert. Dabei ist es das Ziel, mithilfe der Einrichtung 2 für jeden Durchsatz automatisch den wirtschaftlich optimalen Arbeitspunkt unter Einhaltung von Nebenbedingungen für die Produktqualität zu finden. Als historische Prozessdaten werden bei einem früheren Betrieb der Anlage 1 Werte verschiedener Prozessvariablen erfasst und für jede Prozessvariable eine zeitliche Datenfolge, die den in dem Messfenster gewonnenen Messwerten entspricht, in einem Datenspeicher 6 abgespeichert. Bei den Prozessvariablen kann es sich entsprechend einer Signalverbindung 7 um Eingangsvariablen der Anlage 1 sowie entsprechend einer Signalverbindung 8 um Ausgangsvariablen der Anlage 1 handeln. In entsprechender Weise werden zudem zeitliche Datenfolgen von Störgrößen 13 gemessen und abgespeichert, wie es in der Figur durch eine Signalverbindung 9 angedeutet ist.

Zum Auffinden des optimalen Arbeitspunktes wird sich nicht von einem "zufälligen" aktuellen Zustand vorangetastet entsprechend einem Stochern im Nebel, bis eine Optimierungsrichtung gefunden werden kann, sondern es werden zuerst die im Datenspeicher 6 hinterlegten historischen Prozessdaten mittels einer Auswerteeinrichtung 10 ausgewertet, um herauszufinden, welcher der in der Vergangenheit gefundenen Arbeitspunkte im Lichte des definierten Gütekriteriums der beste ist. Dieser wird zum einen dem Bediener 3 auf der Bedieneinheit 4 zur Kenntnis gegeben und zum anderen entsprechend einer Signalverbindung 11 auf eine Auswahleinrichtung 12 geführt. Der Bediener 3 kann nun auswählen, ob er den durch die Einrichtung 2 ermittelten besten Arbeitspunkt dann für den zukünftigen Betrieb der Anlage 1 durch entsprechende Einstellung der Auswahleinrichtung 12 direkt als neuen Arbeitspunkt übernimmt oder ob er den vorgeschlagenen besten Arbeitspunkt als Startpunkt für eine sich anschließende weitere Optimierung oder zur Definition einer Laufrichtung für eine sich daran anschließende, vom aktuellen Arbeitspunkt ausgehende weitere Optimierung wählt, die beispielsweise nach dem bekannten sequentiellen empirischen Optimierungsverfahren ablaufen kann.

Zum Auffinden des besten Arbeitspunkts anhand der im Datenspeicher 6 abgespeicherten historischen Prozessdaten wird gemäß einem Ausführungsbeispiel folgendermaßen vorgegangen:
- Zunächst wird ein Gütekriterium definiert, welches der Bediener 3 beispielsweise über die Bedieneinheit 4 der Einrichtung 2 vorgibt. Dies kann auf dieselbe Weise wie bei der bereits bekannten sequentiellen empirischen Optimierung erfolgen. Im Gütekriterium können neben den Entscheidungsvariablen beliebige messbare Prozessvariablen vorkommen. Die mathematische Form des Gütekriteriums ist nicht eingeschränkt. Zusätzliche Parameter, wie z. B. Preise für Rohstoffe oder Energie, können durch den Bediener 3 eingegeben oder von externen Quellen automatisch geladen werden.
- Im nächsten Schritt wird der historische Datenbestand zur Ermittlung der Arbeitspunkte, die in die Bestimmung des besten Arbeitspunkts einbezogen werden, auf stationäre Zustände durchsucht und jeweils ein den Zustand kennzeichnendes Zeitfenster bestimmt. Dazu kann beispielsweise ein aus der WO 2008/145154 A1 bekanntes Verfahren oder ein beliebiges anderes Verfahren zur Bestimmung eines stationären Zustands in zeitlichen Folgen von Prozessdaten herangezogen werden.
- In einem weiteren Schritt werden zur Bestimmung der Arbeitspunkte über die jeweiligen zeitlich zueinander korrespondierenden Ausschnitte der Datenfolgen, die dem jeweiligen Zeitfenster des stationären Zustands eines Arbeitspunkts entsprechen, Mittelwerte aller relevanten Prozessvariablen berechnet.
- Anschließend werden alle stationären Zustände von der Bestimmung des besten Arbeitspunkts ausgeschlossen, in denen irgendwelche Nebenbedingungen des Optimierungsproblems verletzt werden, z. B. in denen Grenzwerte für die Produktqualität nicht eingehalten werden.
- Für alle so erhaltenen Arbeitspunkte, in welchen die Nebenbedingungen erfüllt sind, wird das Gütekriterium ausgewertet, d. h. jeweils eine Maßzahl für die Güte des Betriebs der Anlage bei den verschiedenen Arbeitspunkten berechnet.
- Mit einem geeigneten Suchverfahren wird der beste Arbeitspunkt, d. h. der Arbeitspunkt mit der besten Güte im Sinne des Gütekriteriums, bestimmt.

Auf diese Weise wird der beste Arbeitspunkt ermittelt, der in der betrachteten Vergangenheit jemals auf der Anlage 1 gefahren worden ist.

Störgrößen 13, welche einen Einfluss auf den Betrieb der Anlage 1 ausüben, werden zusätzlich erfasst und zeitlich zu den Datenfolgen der Prozessvariablen korrespondierende Datenfolgen der Störgrößen 13 im Datenspeicher 6 abgespeichert. Störgrößen 13, die nicht aktiv beeinflusst werden können, stehen nicht als Entscheidungsvariablen zur Verfügung. Bei dem Beispiel einer Anlage 1 mit einem Wirbelschichttrockner werden als Störgrößen die Feuchte des Edukts, die Feuchte der angesaugten Frischluft und/oder deren Massendurchsatz berücksichtigt, sofern sie gemessen werden und sich im Betrieb so stark ändern, dass sie einen signifikanten Einfluss auf das Anlagenverhalten an dem jeweiligen Arbeitspunkt haben. Falls die Anlage 1 mit verschiedenen Rohstoffsorten mit unterschiedlichem Feuchtegehalt betrieben wird, kann es daher für verschiedene Rohstoffsorten unterschiedliche beste Arbeitspunkte als Ergebnis der Optimierung geben. Falls die Anlage 1 mit Frischluft aus der Umgebung betrieben wird, kann es zudem verschiedene beste Arbeitspunkte für verschiedene Wetterlagen mit hoher oder geringer Luftfeuchtigkeit geben. Weiterhin kann es verschiedene beste Arbeitspunkte z. B. für einen Teillastbetrieb und einen Volllastbetrieb geben, wenn die Anlage 1 mit verschiedenem Massendurchsatz betrieben werden kann.

Beim konkreten Beispiel einer Anlage 1 mit einem Wirbelschichttrockner stehen beispielsweise die Sollwerte für Heißlufttemperatur und Heißluftmassenstrom als Entscheidungsvariablen für den Arbeitspunkt zur Verfügung. Eine gegebene Trocknungsaufgabe kann nämlich prinzipiell mit einer kleineren Menge heißerer Luft oder mit einer größeren Menge etwas weniger heißer Luft gelöst werden. Die Frage ist, welche Kombination unter wirtschaftlichen Gesichtspunkten optimal ist. Als Nebenbedingungen sind die Anforderungen an die Produktqualität zu erfüllen, die bei diesem Beispiel in Form von zulässigen Bereichen für Produktfeuchte und Produkttemperatur spezifiziert werden.

Zur Bestimmung der Arbeitspunkte werden zunächst alle nicht stationären dynamischen Vorgänge aus dem historischen Datenbestand aussortiert, z. B. An- und Abfahrvorgänge, Lastwechsel oder Sollwertsprünge. Von den Ausschnitten der zeitlichen Datenfolgen, die als stationäre Zustände verbleiben, werden nur diejenigen näher untersucht, bei denen alle Nebenbedingungen erfüllt sind, d. h. bei denen die Produktqualität hinsichtlich Feuchtegehalt und Temperatur innerhalb der Spezifikationen liegt. Weitere Nebenbedingungen, z. B. der Betrieb der Antriebsmotoren im zugelassenen Leistungsbereich, werden durch die vorhandene Automatisierung ohnehin eingehalten. Ein zuverlässiges Auffinden eines für den späteren Betrieb geeigneten besten Arbeitspunkts ist somit insgesamt sichergestellt.

Für die Optimierung des wirtschaftlichen Ertrags J werden die Kosten für Rohstoff und Energie sowie die Erlöse für das Produkt bei den verschiedenen Arbeitspunkten betrachtet. Zu den Energiekosten trägt sowohl der thermische Energieverbrauch, der durch die Menge des Heizdampfs für die Erwärmung der Zuluft bestimmt wird, als auch der Stromverbrauch für Heißluftgebläse und Zellenradschleuse bei. Bei der Berechnung des Produkterlöses wird zudem beachtet, dass die Masse des Produkts durch den Trocknungsvorgang abnimmt und der Massenstrom vorteilhaft lediglich im Zulauf gemessen wird. Dazu wird der Produktmassenstrom indirekt aus dem Eduktmassenstrom berechnet. Der wirtschaftliche Ertrag J als zu maximierendes Gütekriterium kann als Differenz aus Erlös und der Summe der mit dem Betrieb der Anlage verbundenen Kosten berechnet werden. Kosten und Erlös werden durch einfache Formeln ausgedrückt und in die Zielfunktion, d. h. das Gütekriterium, eingesetzt, wobei alle externen Parameter, z. B. Rohstoff- und Energiepreise sowie Apparatedaten, mit Zahlen hinterlegt werden. Das Gütekriterium wird für jeden anhand der historischen Prozessdaten bestimmten Arbeitspunkt ausgewertet.

## Patentansprüche

1. Einrichtung zur Optimierung eines Arbeitspunktes für den Betrieb einer automatisierten prozesstechnischen Anlage (1), mit einem Datenspeicher (6), in welchem für mehrere Prozessvariablen jeweils eine bei einem Betrieb der Anlage (1) erfasste zeitliche Datenfolge abspeicherbar ist, und mit einer Auswerteeinrichtung (10), die zur Bestimmung jeweils einer Maßzahl für die Güte des Betriebs der Anlage bei verschiedenen Arbeitspunkten anhand eines vorbestimmten Gütekriteriums, wobei jeder Arbeitspunkt anhand zeitlich zueinander korrespondierender Ausschnitte der Datenfolgen bestimmt ist, und zur Bestimmung und Anzeige des Arbeitspunkts mit der besten Güte ausgebildet ist.

2. Einrichtung nach Anspruch 1, **dadurch gekennzeichnet, dass** die Auswerteeinrichtung (10) dazu ausgebildet ist, zur Auswahl der Arbeitspunkte, für welche jeweils Maßzahlen der Güte bestimmt werden, abgespeicherte Datenfolgen auf zeitlich zueinander korrespondierende Ausschnitte zu durchsuchen, die zumindest näherungsweise stationären Zuständen des Betriebs der Anlage (1) entsprechen.

3. Einrichtung nach Anspruch 2, **dadurch gekennzeichnet, dass** die Auswerteeinrichtung (10) dazu ausgebildet ist, über die zeitlich zueinander korrespondierenden Ausschnitte jeweils einen Mittelwert der Datenfolgen zu berechnen und anhand der berechneten Mittelwerte die Arbeitspunkte zu bestimmen.

4. Einrichtung nach einem der vorhergehenden Ansprüche, **dadurch gekennzeichnet, dass** durch die Auswerteeinrichtung (10) Arbeitspunkte von der Bestimmung des Arbeitspunkts mit der besten Güte ausschließbar sind, wenn ein vorbestimmtes Kriterium bei diesen Arbeitspunkten nicht erfüllt ist.

5. Einrichtung nach einem der vorhergehenden Ansprüche, **dadurch gekennzeichnet, dass** in dem Datenspeicher (6) zusätzlich jeweils eine Datenfolge zumindest einer Störgröße abspeicherbar ist, dass Arbeitspunkte gemäß den Werten der Störgröße zur jeweiligen Betriebszeit durch die Auswerteeinrichtung 10 vorbestimmten Clustern zuordenbar sind, wobei die Cluster jeweils einem vorbestimmten Wertebereich der Störgröße entsprechen, und dass durch die Auswerteeinrichtung (10) für unterschiedliche Cluster jeweils ein Arbeitspunkt mit der besten Güte bestimmbar ist.

6. Verfahren zur Optimierung eines Arbeitspunktes für den Betrieb einer automatisierten prozesstechnischen Anlage (1) mit den folgenden Schritten:
Abspeichern jeweils einer bei einem Betrieb der Anlage (1) erfassten Datenfolge für mehrere Prozessvariablen in einem Datenspeicher (6),
Bestimmen jeweils einer Maßzahl für die Güte des Betriebs der Anlage (1) bei verschiedenen Arbeitspunkten mittels einer Auswerteeinrichtung (10) anhand eines vorbestimmten Gütekriteriums, wobei jeder Arbeitspunkt anhand zeitlich zueinander korrespondierender Ausschnitte der Datenfolgen bestimmt wird und
Bestimmen und Anzeigen des Arbeitspunkts mit der besten Güte.

7. Computerprogramm mit durch einen Computer ausführbaren Programmcodeanweisungen zur Implementierung des Verfahrens nach Anspruch 6, wenn das Computerprogramm auf einem Computer ausgeführt wird.

8. Computerprogrammprodukt, insbesondere Datenträger oder Speichermedium mit einem durch einen Computer ausführbaren Computerprogramm gemäß Anspruch 7.
